# EUROPEAN PATENT APPLICATION

(11) **EP 3 051 499 A1**
(43) Date of publication of application: **03.08.2016**
(21) Application number: 15766010.1
(22) Date of filing: 02.02.2015
(51) Int. Cl.: G06T 17/05, G06T 11/60, G09B 29/00

(54) **THREE-DIMENSIONAL-MAP DISPLAY SYSTEM**

(30) Priority: 19.03.2014 JP 2014055711
(71) Applicant: Geo Technical Laboratory Co., Ltd., Fukuoka-shi, Fukuoka 812-0013 (JP)
(72) Inventor: ARAMAKI Masatoshi, Fukuoka-shi Fukuoka 812-0013 (JP); KISHIKAWA Kiyonari, Fukuoka-shi Fukuoka 812-0013 (JP); TESHIMA Eiji, Fukuoka-shi Fukuoka 812-0013 (JP); UCHINOUMI Masashi, Fukuoka-shi Fukuoka 812-0013 (JP); NAKAGAMI Masaru, Fukuoka-shi Fukuoka 812-0013 (JP); AZAKAMI Tatsuya, Fukuoka-shi Fukuoka 812-0013 (JP); YONEKURA Tatsurou, Fukuoka-shi Fukuoka 812-0013 (JP)
(74) Representative: Eder Schieschke & Partner mbB
(86) International application number: PCT/JP2015/052844
(87) International publication number: WO 2015/141300

(57) **Abstract**

[Object]

To realize three-dimensional display while visibility of characters is ensured in the 3D map.

[Solution]

In displaying a 3D map, a feature image is generated by perspective projection of the feature on the basis of a predetermined position of the point of sight and a predetermined direction of the line of sight. In addition, a plate polygon on which characters are pasted is arranged in a virtual 3D space, and parallel projection is applied to the plate polygon so as to generate a character image. The plate polygon is arranged in a direction along a road and tilted from the ground surface. A tilt angle between the plate polygon and the ground surface is set on the basis of a display direction of the road and a display position of the character. Thus, by generating a feature image by perspective projection while generating a character image by parallel projection, negative effects such as crushing of distant characters can be avoided, whereby the characters can be displayed in three-dimensional shape without reducing visibility thereof.

## Description

### [Technical Field]

The present invention relates to a 3D map display system which displays a 3D map three-dimensionally representing not only features but also characters.

### [Background Arts]

In an electronic map used for a navigation apparatus, a computer screen and the like, a 3D map three-dimensionally representing features such as a building is used in some cases. The 3D map is usually displayed by three-dimensionally drawing a 3D model by perspective projection or the like.

In the 3D map, characters are also displayed in various aspects. Patent Literature 1 illustrates an output example which draws a road and the like by a bird's eye view and two-dimensionally displays characters along the road. An output example in which a name of the road and the like are three-dimensionally displayed as a road sign perpendicularly standing on the road is also disclosed. The three-dimensional display can be also realized by preparing a plate polygon on which characters are pasted, and this is arranged in a virtual 3D space and subjected to perspective projection.

### [Citation List]

### [Patent Literature]

[Patent literature 1] Japanese Patent No. 3402011

### [Summary of Invention]

### [Problems to be Solved by Invention]

In order to utilize the three-dimensional display as a 3D map, the characters are also preferably displayed three-dimensionally. However, with a method of perspective projection of the plate polygon on which the characters are pasted, the characters subjected to the perspective projection can be hardly recognized visually if the plate polygon is arranged in parallel with a direction of the line of sight or if it is arranged far from the point of sight in some cases.

As a method for avoiding such a negative effect, there can be a method that a 2D image three-dimensionally representing characters is prepared in advance, and this is pasted on the perspective projection. However, if a 3D map is to be displayed from various point of sights and direction of the line of sights by such method, various and diversified character images according to these point of sights and direction of the line of sights need to be prepared, and its data amount becomes huge.

The present invention was made in view of such problems and has an object to realize three-dimensional display while visibility of the characters is ensured in the 3D map.

### [Means for Solving the Problem]

The present invention is a 3D map display system for displaying a 3D map including a feature and a character string and can be configured by including:
a map database storing feature data representing a 3D shape of the feature and character data for displaying the character string;
a feature image generating unit for generating a feature image by perspective projection of the feature arranged in a virtual 3D space by using the feature data;
a character image generating unit for generating a character image by using the character data by arranging a polygon representing the character string in the virtual 3D space and applying parallel projection to the polygon; and
a superposing unit for superposing and displaying the character image on the feature image.

According to the present invention, though the feature is drawn by perspective projection, an image representing a character is generated by parallel projection. Since the parallel projection is a projecting method having no relation with the position of the point of sight, it is capable of projection of the characters which are located far from the point of sight in a visually recognizable state. Moreover, since the character image is generated by parallel projection of the polygon representing the character, diversified images according to an arrangement state of the polygon and a projecting direction of the parallel projection can be prepared without requiring preparation of huge image data in advance. Then, the characters can be three-dimensionally represented in diversified aspects depending on the arrangement state of the polygon representing the character. As described above, according to the present invention, the diversified three-dimensional representation can be realized while visibility of the characters is ensured.

The present invention can be applied to various characters displayed in the map, and all the characters or only a part of them may be targets.

In the present invention, those having various shapes such as a flat plate, a cylindrical shape and the like can be used for the polygon representing the character.

A direction of the parallel projection when the character image is to be generated can be set arbitrarily as long as it is a direction diagonally tilted from a perpendicular direction. However, though the projection direction can be represented by tilting from the perpendicular and a projection azimuth, the projection azimuth is preferably kept within a range in which a difference from the direction of the line of sight of the perspective projection is smaller than 90 degrees or more preferably, within an approximate range in which it is smaller than 45 degrees.

Superposing of the character image on the feature image can be also performed by various methods. For example, it may be so configured that the polygon is arranged in a virtual space in accordance with a three-dimensional positional coordinate where the character should be displayed and parallel projection is applied, and the obtained character image is superposed on the feature image as it is. Alternatively, such a method may be employed that individual character images are generated for each character by the parallel projection and moreover, a display position on the feature image is acquired by applying coordinate conversion to the display position of the character in accordance with the perspective projection, and the character image is individually arranged at an obtained display position.

In the present invention, the character image generating unit may perform parallel projection from the same direction as the direction of the line of sight in the perspective projection.

As described above, the direction of the parallel projection is represented by the tilting from the perpendicular and the projection azimuth, but this aspect means a state in which the both are substantially matched with the direction of the line of sight. However, the same direction does not mean a strictly identical angle but it has a meaning including an error range to such a degree that a significant difference is not generated in the projected image. As described above, by matching the direction of the line of sight with the direction of the parallel projection, a sense of discomfort caused by the feature image by the perspective projection and the character image can be further alleviated.

Moreover, in the present invention, it may be so configured that
the character image generating unit generates a character plate polygon on which the character string is pasted,
arranges the character plate polygon in a virtual 3D space so that an angle between the character plate polygon and a ground surface is a predetermined value set on the basis of an arrangement direction and an arrangement position of the character in the projection image, and
performs the parallel projection.

By such a configuration, the character can be displayed in a state in which the character plate polygon is diagonally stood on the ground surface like a signboard. Moreover, this angle can be changed in accordance with the arrangement direction and the arrangement position of the character. As a result, not only that the character can be represented three-dimensionally but a depth can be also felt by the tilting of the character.

Moreover, in the present invention, it may be so configured that
the character image generating unit generates the character individually image for each character string stored in the character data, and
the superposing unit sets arrangement of the character image in the projection image individually and performs superposition.

In the present invention, since the feature is displayed by the perspective projection and the character by the parallel projection, even if the both are arranged in the virtual 3D space, deviation is generated in the coordinate values of a projection result in some cases. However, according to the aforementioned aspect, since the arrangement of the character is set individually, such deviation is not generated but the character can be displayed at an appropriate position.

Moreover, in the present invention, it may be so configured that
the feature includes a road, and the character string includes a name of the road, and
the character image generating unit generates the character image by arranging the character string representing the name of the road in a direction along the road.

The present invention can be applied to various characters as targets but it is particularly useful when being applied to the name of the road as in the aforementioned aspect. It is useful to display the characters representing the name of the road in the direction along the road so that a correspondence with the road can be grasped easily. Moreover, a width of the road becomes narrow by the perspective projection in a region far from the point of sight. If the two-dimensional characters are displayed in the same size in that situation, such trouble might be caused that the road is hidden by the characters. According to the present invention, the characters can be displayed three-dimensionally by three-dimensionally tilting the characters from a road surface while the characters are displayed in the direction along the road and thus, diversified display according to the road width can be realized. Moreover, since the characters are subjected to parallel projection, its visibility does not deteriorate even in the region far from the point of sight. Therefore, in the present invention, the characters along the road can be displayed in an aspect which avoids troubles that visibility is damaged or the road is hidden by the characters.

The present invention does not necessarily have to include all of the aforementioned various characteristics but some of them may be omitted or combined in configuration as appropriate.

In addition, the present invention may be configured as a 3D map display method for displaying a 3D map by a computer or may be configured as a computer program for performing such display by the computer. Moreover, it may be configured as a computer-readable recording medium such as a CD-R, a DVD and the like recording such computer program.

### [Brief Description of the Drawings]

[Fig. 1] Fig. 1 is an explanatory view illustrating configuration of a 3D map display system.
[Fig. 2] Fig. 2 is an explanatory view illustrating structures of feature data and character data.
[Fig. 3] Fig. 3 is an explanatory view illustrating tilt display of a character with respect to a road in a right-and-left direction.
[Fig. 4] Fig. 4 is an explanatory view illustrating the tilt display of the character with respect to a road in a perpendicular direction.
[Fig. 5] Fig. 5 is an explanatory view illustrating the tilt display of the character with respect to a road in a lower right direction.
[Fig. 6] Fig. 6 is an explanatory view illustrating the tilt display of the character with respect to a road in an upper right direction.
[Fig. 7] Fig. 7 is an explanatory view illustrating setting of a tilt angle.
[Fig. 8] Fig. 8 is a flowchart of route guidance processing.
[Fig. 9] Fig. 9 is a flowchart (1) of map display processing.
[Fig. 10] Fig. 10 is a flowchart (2) of map display processing.
[Fig. 11] Fig. 11 is an explanatory view illustrating a display example of a 3D map.

### [Description of Embodiments]

### Embodiment 1

### A. System configuration:

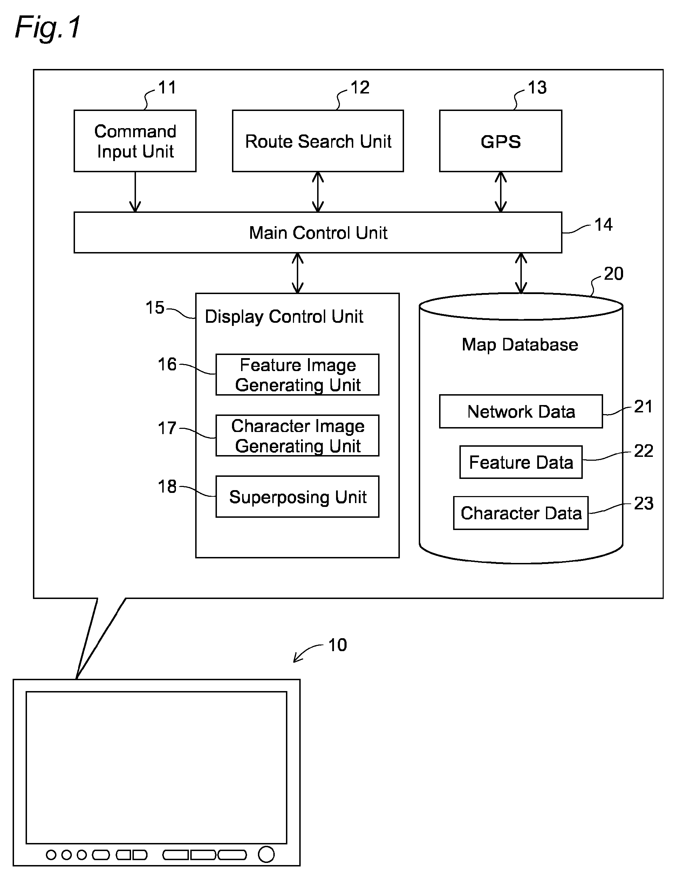

Fig. 1 is an explanatory view illustrating configuration of a 3D map display system 10. A configuration example as a navigation apparatus performing route guidance from a starting point to a destination specified by a user while displaying a 3D map is illustrated. In this embodiment, the present invention is not limited to the configuration as the navigation apparatus but also can be configured as a system only for displaying a map. Moreover, in this embodiment, a system operated in a stand-alone manner is exemplified but a part of functions illustrated in the figure may be configured by a plurality of servers and the like connected via a network.

The 3D map display system 10 is configured by a computer including a CPU, a RAM, and a ROM. Each illustrated functional block is configured by installing software for realizing these functions. The functions of each functional block are as follows.

A map database 20 stores map data used for 3D map display. The map data includes network data 21, feature data 22, and character data 23. The network data 21 is data representing a road by a link and a node and is data used for route search. The feature data 22 is data storing 3D models representing three-dimensional shapes of the features such as a road and a building. The character data 23 is data storing character strings displayed in the map.

A main control unit 14 exerts a function for controlling an operation of each functional block.

A command input unit 11 receives an input of a command by the user. The input commands include specification of a starting point and a destination of route guidance, specification of a display range of the map and the like.

A route search unit 12 performs route search from the specified starting point to destination by using the network data 21. For the route search, a known method such as the Dijkstra method can be applied.

A GPS 13 acquires position information from a GPS (Global Positioning System) or the like and specifies a current position.

A display control unit 15 performs map display. In this embodiment, a 3D map is displayed but a 2D map may be additionally displayed.

The display control unit 15 has a feature image generating unit 16, a character image generating unit 17, and a superposing unit 18. The feature image generating unit 16 arranges the 3D model stored in the feature data 22 in a virtual 3D space and performs perspective projection from a specified position of the point of sight and direction of the line of sight. This projection view is called a feature image in this embodiment. The character image generating unit 17 arranges a polygon on which a character string stored in the character data 23 is pasted (hereinafter also referred to as a "character polygon" in some cases) in the virtual 3D space and performs parallel projection. This projection view is called a character image in this embodiment. The superposing unit 18 displays the 3D map by superposing this character image on the feature image.

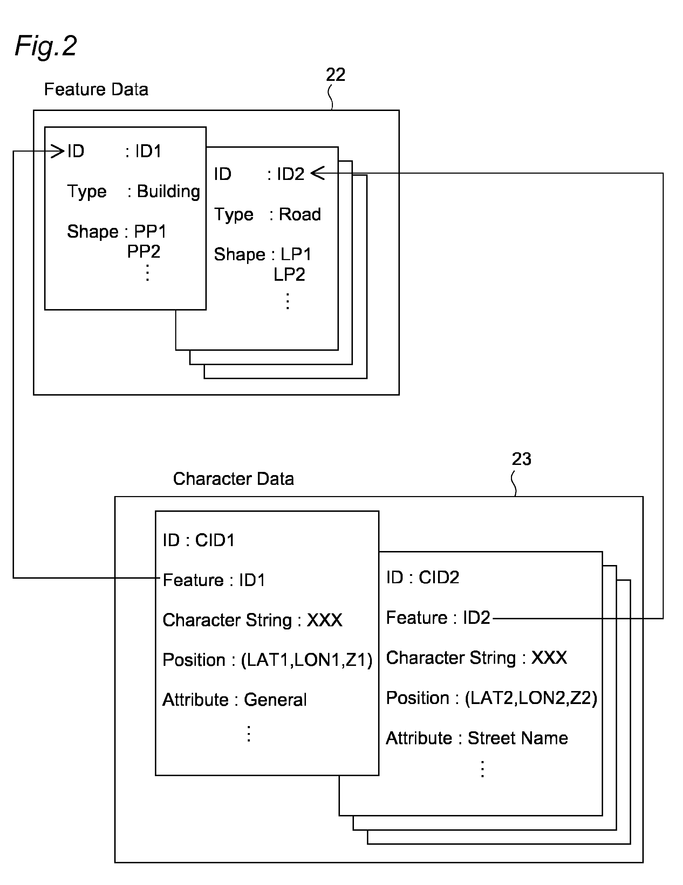

Fig. 2 is an explanatory view illustrating structures of the feature data 22 and the character data 23. On an upper side of the figure, the structure of the feature data 22 is illustrated. An ID is identification information given to each feature. A type is information indicating a type of the feature such as a building and a road. A shape is data representing a 3D shape of each feature. Regarding the building, 3D coordinates of apexes PP1 and PP2 of a polygon representing a 3D shape are stored. The road is represented not by a polygon but by 3D line data in this embodiment, and 3D coordinates of configuration points LP1 and LP2 of the line data are stored.

On a lower side of the figure, the structure of the character data 23 is illustrated. An ID is identification information for each character data. The feature is information for specifying a feature with which the character data is associated. In this embodiment, the ID of the feature data 22 is stored. For example, since ID1 is stored as the feature for the character data with CID1 in the figure, this character data means that it represents a name of the building or the like indicated by ID1 of the feature data 22. Regarding the character data of CID2, since ID2 is stored as the feature, this character data means that it represents a name of the road or the like indicated by ID2 of the feature data 22. The character string is characters which should be displayed. A position is a three-dimensional positional coordinate where the character is displayed. An attribute is information indicating a type of the characters, and two types of the attribute, that is, "general" and "street name" are prepared in this embodiment. The "street name" indicates the name of a road or the like, while the "general" indicates the other character strings. The attribute is information used in display control of the characters which will be described later. The character data 23 may also store various types of information such as character sizes and fonts other than the above.

B. Setting of tilt angle:
In this embodiment, display of the character string stored in the character data 23 is controlled in the following modes. First, the characters are sorted to the street names and the other generals and only the street names are made to be control targets. The general character strings may be displayed two-dimensionally on a map image or may be displayed with the feature by the perspective projection.
Regarding the street name, the character string is displayed in a direction along the corresponding road. The character string is displayed as a signboard leaning diagonally on the ground surface by rotating it, that is, by tilting it around lower ends of the characters with respect to the ground surface. This angle of tilting shall be called a tilt angle below. The tilt angle is set in accordance with a direction of the road in the perspective projection view and a display position of the character in the perspective projection view, that is, a distance from the point of sight. A specific setting method of the tilt angle of the character will be described below.

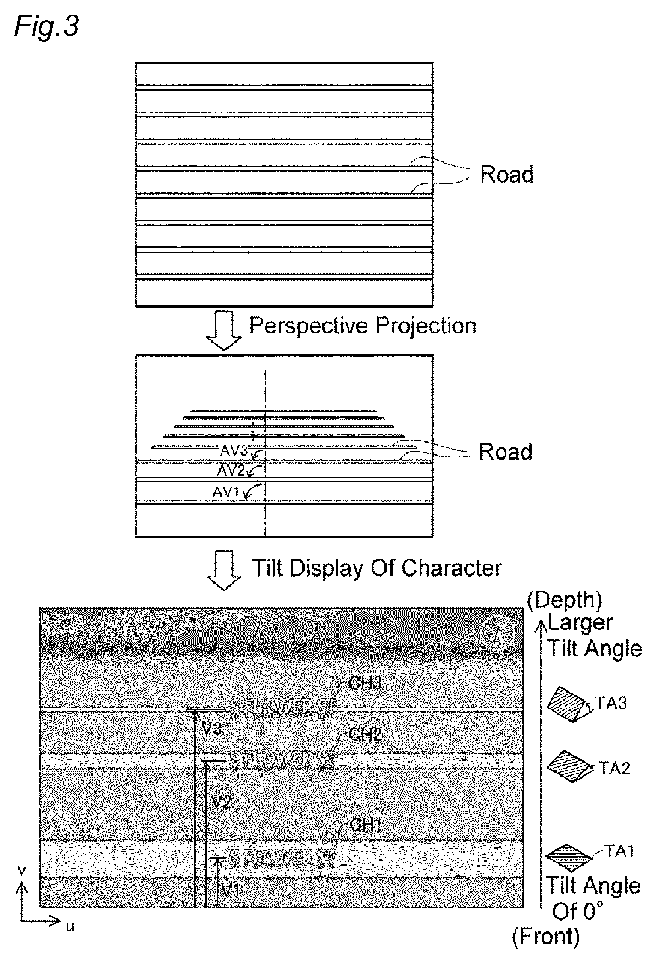

Fig. 3 is an explanatory view illustrating tilt display of the character with respect to a road in the right-and-left direction.

On an uppermost stage, a state of the roads in a 2D map is illustrated.

On a middle stage, a state of the perspective projection of the roads is illustrated. By means of the perspective projection, as it goes farther from the point of sight, an interval between the roads becomes gradually narrower, but the direction of the road is the right-and-left direction also in the perspective projection. The directions of the roads are indicated by angles AV1, AV2, AV3 and the like based on a vertical direction (one-dot chain line in the figure) of the perspective projection view (hereinafter this angle shall be called a display direction in some cases). In the case of the road in the right-and-left direction, the display directions AV1, AV2, and AV3 are approximately 90 degrees.

On a lower stage, a display example of a 3D map displaying the road with the characters superposed thereon is illustrated. The road is displayed in a perspective projection view. The positional coordinates in the perspective projection view are indicated by coordinates of a lateral direction u and a vertical direction v. The tilt angles of character strings CH1, CH2, and CH3 of the street names are set such that as they move from the front of the point of sight to the depth as illustrated on the right side in the figure, that is, as the positions V1, V2, and V3 in the v-axis direction in the perspective projection view become larger, the angles become gradually larger from 0 degrees as the angles TA1 to TA3. Regarding a range to which such control is applied, the display directions AV1 to AV3 do not have to be strictly 90 degrees but may have a certain margin.

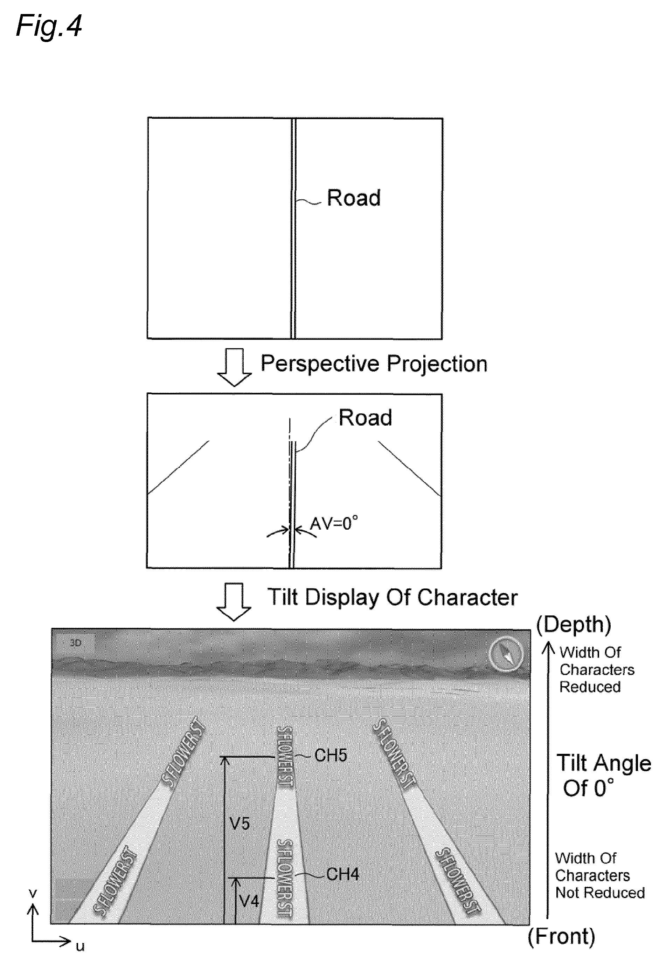

Fig. 4 is an explanatory view illustrating the tilt display of the character with respect to the road in the perpendicular direction.

On the uppermost stage, a state of the road in a 2D map is illustrated. The perpendicular direction means that the two-dimensional direction of the road is substantially a vertical direction.

On the middle stage, a state of perspective projection of the roads is illustrated. Even after the perspective projection, the direction of the road stays in the perpendicular direction and does not change. The display direction AV is approximately 0 degrees.

On the lower stage, a display example of a 3D map displaying the characters superposed on this road is illustrated. The road is displayed in a perspective projection view. Character strings CH4 and CH5 of the street names become unnatural however they are tilted if they are displayed along the road. An example in which diagonal roads are illustrated on both sides of a center road and the characters are tilted and displayed is illustrated. If the characters are displayed by being tilted as above on the perpendicular road, a sense of discomfort remains in the display however they are tilted. Therefore, for the perpendicular road, the tilt angle shall be 0 degrees regardless of the values of the positions V4 and V5 in the v-axis direction in the perspective projection view from the front of the point of sight to the depth as illustrated on the right side of the figure.

However, in order to give a feeling of the depth by the display state of the characters, regarding the road displayed perpendicularly, as the positions of the characters go from the point of sight to the depth, that is, as the positions V4 and V5 in the depth direction become large, a width of the characters in the vertical direction or in a direction along the road is reduced. This display can be realized by tilting with respect to the ground surface by using an end on a side closer to the point of sight in the character string or a side of the character "T" at the end of "SFLOWERST" as an axis in the character string in the figure, for example. This is called character-width reduction in the embodiment. As seen on the right side in the figure, the tilt angle is 0 degrees to the perpendicular road, but reduction of the character width is applied in accordance with the position in the depth direction.

A range in which such control is applied does not necessarily have to be limited to the case that the display direction AV is strictly 0 degrees but can have a certain margin.

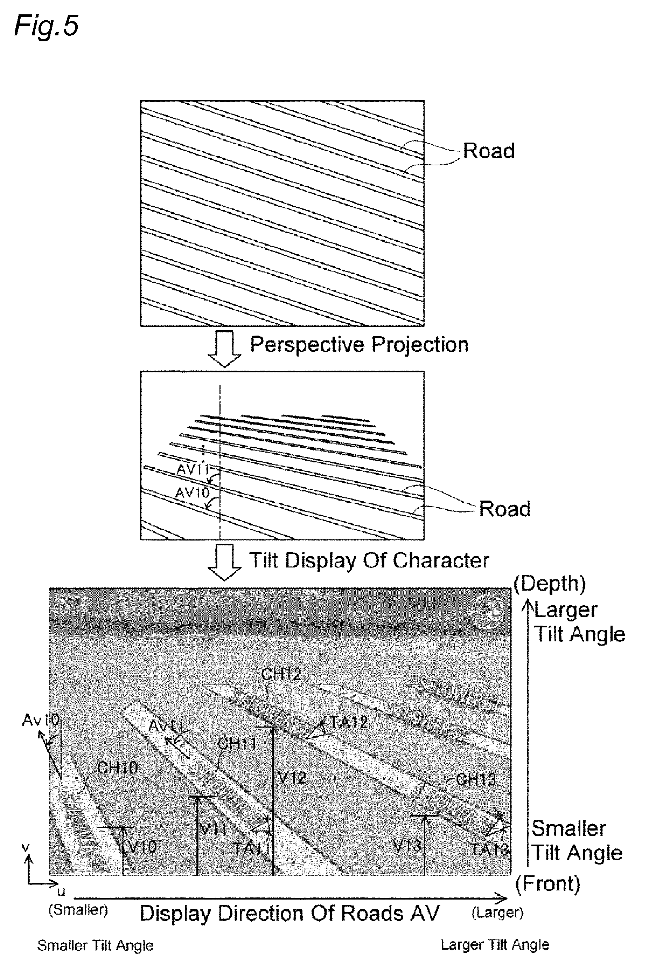

Fig. 5 is an explanatory view illustrating the tilt display of the characters with respect to a road in a lower right direction.

On the uppermost stage, a state of the roads in a 2D map is illustrated. Roads in the lower right substantially in parallel are illustrated.

On the middle stage, the state of the perspective projection of these roads is illustrated. By means of the perspective projection, as it goes farther from the point of sight, the interval between the roads gradually becomes narrow, and display directions AV10 and AV11 of the roads change. Even for the roads in parallel on the 2D, the display directions AV10 and AV11 get closer to 90 degrees as they go deeper from the point of sight. In the case of the road in the lower right, the display direction is within a range larger than 0 degrees and smaller than 90 degrees.

On the lower stage, a display example of the 3D map displaying the characters superposed on these roads is illustrated. The tilt angles of character strings CH10 to CH 13 of the street names are set in accordance with the position in the v-axis direction in the perspective projection view and the display direction.

First, regarding the relation between the display direction and the tilt angle, as illustrated on the lower side in the figure, the smaller the display direction is, that is, the closer the road is to the perpendicular, the smaller the tilt angle becomes, while the larger the display direction is, that is, the closer to the horizontal the road is, the larger the tilt angle becomes. For example, since the display direction Av11 of the character string CH 11 is larger than the display direction Av10 of the character string CH10, a tilt angle TA11 of the character string CH11 becomes larger than the character string CH10. Similarly, a tilt angle TA13 of a character string CH13 becomes much larger.

The relation between the display position and the tilt angle is set so that the deeper the display position goes, the larger the tilt angle becomes as illustrated on the right side in the figure. For example, when the character strings CH12 and CH13 are compared with each other, their display directions are the same but it is the display position V12 > display position V13, which results in the tilt angle TA12 > tilt angle TA13. Since the display positions V10 and V11 of the character strings CH10 and CH11 are smaller than the display position V12 of the character string CH12, and since the display directions Av10 and Av11 are also smaller than the character string CH12, the tilt angles of the character strings CH10 and CH11 are smaller than the character string CH12.

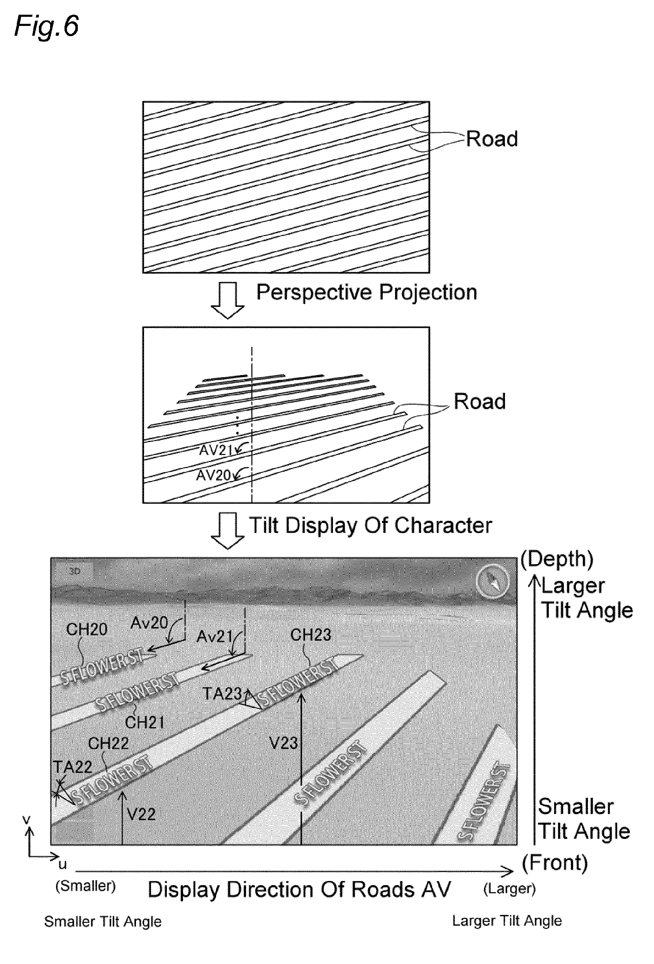

Fig. 6 is an explanatory view illustrating the tilt display of the characters with respect to a road in an upper right direction.

On the uppermost stage, a state of the roads in a 2D map is illustrated. Roads in the upper right substantially in parallel are illustrated.

On the middle stage, the state of the perspective projection of these roads is illustrated. By means of the perspective projection, as it goes farther from the point of sight, the interval between the roads gradually becomes narrow, and display directions AV20 and AV21 of the roads change. Even for the roads in parallel on the 2D, the display directions AV20 and AV21 get closer to 90 degrees as they go deeper from the point of sight. In the case of the road in the upper right, the display direction is within a range larger than 90 degrees and smaller than 180 degrees.

On the lower stage, a display example of the 3D map displaying the characters superposed on these roads is illustrated. The roads are displayed in the perspective projection view. The tilt angles of character strings CH20 to CH 23 of the street names are set in accordance with the position in the v-axis direction in the perspective projection view and the display direction.

Regarding the relation between the display direction and the tilt angle, as illustrated on the lower side in the figure, the larger the display direction is, that is, the closer the road is to the perpendicular, the smaller the tilt angle becomes, while the smaller the display direction is, that is, the closer to the horizontal the road is, the larger the tilt angle becomes. For example, since the display direction Av21 of the character string CH21 is larger than the display direction Av20 of the character string CH20, a tilt angle of the character string CH21 becomes smaller than the character string CH20. Similarly, a tilt angle TA23 of a character string CH 23 becomes much smaller.

The relation between the display position and the tilt angle is set so that the deeper the display position goes, the larger the tilt angle becomes as illustrated on the right side in the figure. For example, when the character strings CH22 and CH23 are compared with each other, their display directions are the same but it is the display position V22 < display position V23, which results in the tilt angle TA22 < tilt angle TA23.

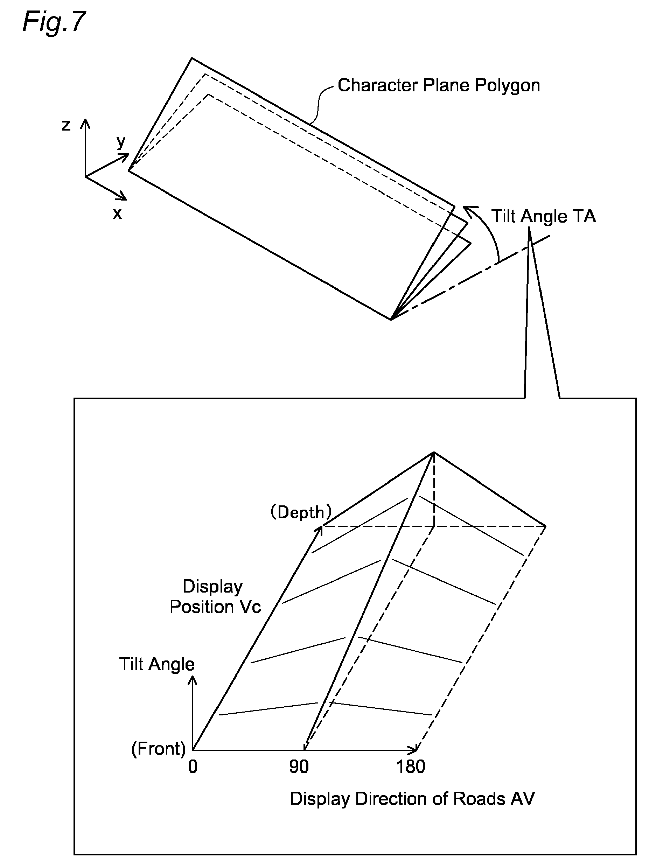

Fig. 7 is an explanatory view illustrating setting of the tilt angle. This summarizes the setting methods of the tilt angle in Figs. 3 to 6.

On the upper stage in the figure, a definition of the tilt angle TA is illustrated. The tilt angle refers to an angle formed by the character plate polygon and the ground surface. Assuming that a direction in which the character string is described as illustrated on the upper left of the figure is the x-axis, a rotating angle from the y-axis in the z-axis direction around the x-axis is the tilt angle.

As illustrated in Figs. 3 to 6, the tilt angle is set by the display direction AV of the toad and a display position Vc of the character.

When it is the display direction AV=0 degrees, that is, when the road in in the perpendicular direction, the tilt angle is 0 degrees as described in Fig. 4 regardless of the display position Vc. In this embodiment, regardless of the display direction AV, the tilt angle is set to 0 degrees at a position the closest to the point of sight. When the display direction AV=90 degrees, that is, when the road is in the right-and-left direction, the deeper the display position Vc goes to, the larger the tilt angle becomes as described in Fig. 3. A range from 0 to 90 degrees of the display direction AV indicates the state of the road in the lower right direction, and the range from 90 to 180 degrees of the display direction AV indicates the state of the road in the upper right direction. In these ranges, the tilt angle is determined in accordance with the display direction AV and the display position Vc.

The setting example illustrated in Fig. 7 is only an example, and the tilt angle can be set arbitrarily in accordance with the display direction AV and the display position Vc. In Fig. 7, the example in which the tilt angle is linearly changed with respect to the display direction AV and the display position Vc is illustrated, but setting may be made so that the it is changed in a curved manner. Moreover, instead of monotonic increase or monotonic decrease, the setting may have an extreme value.

C. Route guidance processing:
The processing example displaying a map by using setting of the tilt angle of the character string described above will be described using a case in which a navigation apparatus (see Fig. 1) performs route guidance as an example in this embodiment.

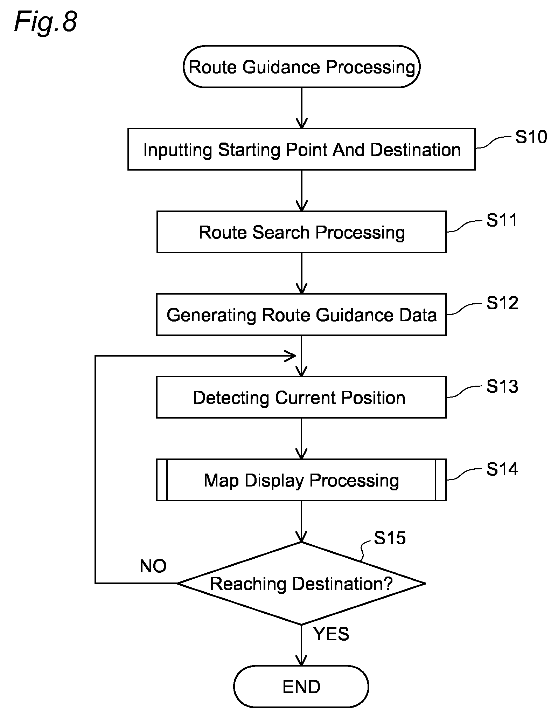

Fig. 8 is a flowchart of the route guidance processing. When the processing is started, the navigation apparatus receives an input of a starting point and a destination (Step S10) and performs the route search (Step S11). The route search can be made by the Dijkstra method or the like using network data. Then, route guidance data representing an obtained route or information specifying a link string which should be a route, for example is generated (Step S12), and the route guidance is performed on the basis of this.

In the route guidance, the navigation apparatus detects a current position of a vehicle (Step S13), performs the map display processing and displays the 3D map for guiding the route (Step S14). This is repeatedly performed until the vehicle reaches the destination (Step S15).

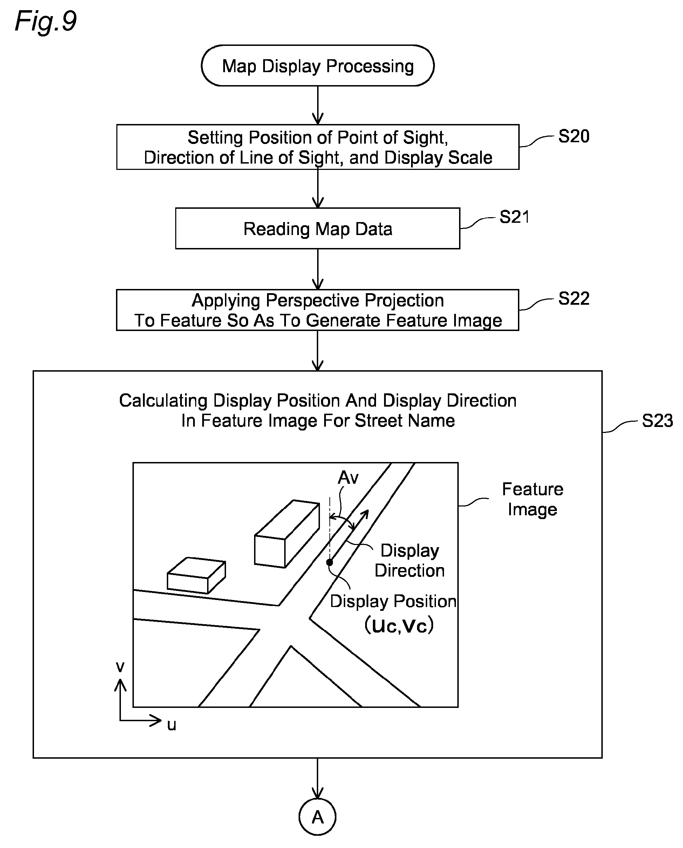

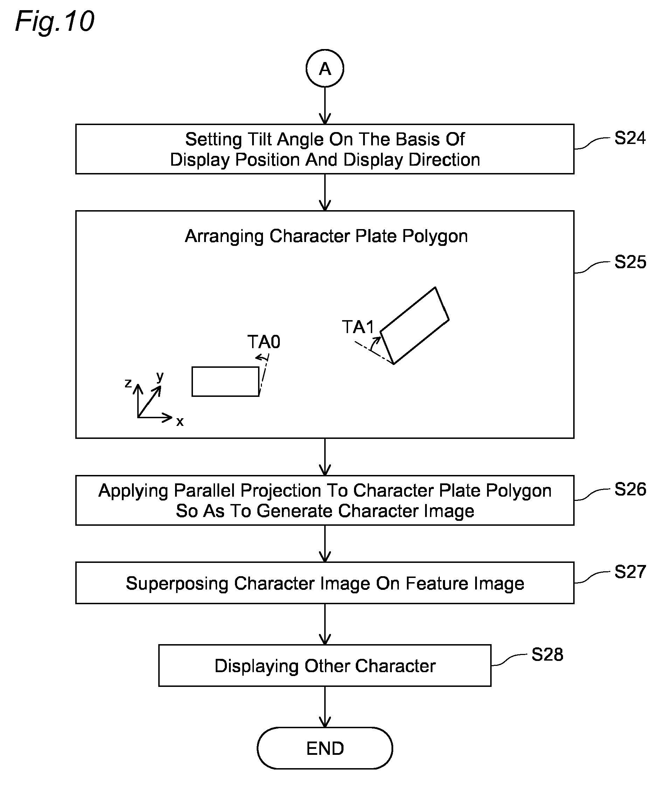

Figs. 9 and 10 are flowcharts of the map display processing. It is processing corresponding to Step S14 of the route guidance processing.

In this processing, the navigation apparatus sets the position of the point of sight, the direction of the line of sight, and the display scale for drawing the 3D map by perspective projection (Step S20). For the position of the point of sight, a method of setting it at a predetermined relative position in the rear of the current position can be employed, for example. The direction of the line of sight can be set to a direction of seeing the current position or the like from the position of the point of sight. Other than the above, the position of the point of sight, the direction of the line of sight and the like may follow specification by the user.

The navigation apparatus reads the map data required for display of the 3D map (Step S21). Then, first, the feature is subjected to the perspective projection so as to generate a feature image (Step S22).

Subsequently, the display position and the display direction in the feature image are calculated for the street name (Step S23). The display direction Av can be represented by an angle from the perpendicular direction as described above in Figs. 3 to 6. First, the street name is extracted on the basis of the attribute of the character data 23, and the roads corresponding to the respective street names are specified. Then, the display direction of the road in the feature image can be acquired. The display position can be acquired by coordinate conversion of the 3D display position set by the character data in accordance with the perspective projection.

Subsequently, the navigation apparatus sets the tilt angle on the basis of the display position and the display direction (Step S24). The tilt angle can be acquired in accordance with the setting illustrated in Fig. 7.

Then, the navigation apparatus arranges the character plate polygon in the virtual space by the set tilt angle (Step S25). An arrangement example is illustrated in the figure. The plate polygon is arranged in accordance with set values of the tilt angles TA0, TA1 and the like, and the character string is pasted to this surface. Regarding the street name, since the characters are displayed along the road, an arrangement direction of the plate polygon of the character is set such that the lower ends thereof are along the road. The display position is set such that it is arranged in accordance with the 3D coordinate set as the display position of the character.

The navigation apparatus generates a character image by applying parallel projection to the character plate polygon (Step S26). The feature image is generated by perspective projection, but the character image is generated not by the perspective projection but by the parallel projection.

A projecting direction of the parallel projection can be set arbitrarily. The projecting direction can be represented by a tilt angle from below the perpendicular and a projecting azimuth but the projecting azimuth is preferably matched with the direction of the line of sight. As a result, a sense of discomfort can be alleviated when the character image is superposed on the feature image. The tilt angle from below the perpendicular does not necessarily have to be matched, but if this is also matched with the direction of the line of sight, the sense of discomfort can be further alleviated.

The parallel projection is a projecting method with no relation with the position of the point of sight. In the perspective projection, the character string located far from the point of sight is crushed and hard to be seen, but the character string included in the character image obtained by the parallel projection can ensure sufficient visibility regardless of the display position.

When the character image is generated as above, the navigation apparatus superposes the character image on the feature image (Step S27). The superposing method may be any one of the following:
A first method is a method of superposing the character image and the feature image as they are. Since the feature image is generated by the perspective projection and the character image is generated by the parallel projection, the coordinate systems in the image of the both do not necessarily match each other. Therefore, the character string in the character image can be displayed with deviation from the position which should be. However, depending on the position of the point of sight and the direction of the line of sight of the perspective projection and the projecting direction of the parallel projection, the deviation between the feature image and the character image cannot be visually recognized in actuality in some cases. In such case, even if the character image and the feature image are superposed as they are, a map without the sense of discomfort can be displayed.

A second method is a method of arranging the character image on a map image for each character string. In this method, the character image is configured for each character string, and the 3D coordinate representing the display position is subjected to coordinate conversion in accordance with the perspective projection, and the display position on the feature image is acquired. Then, this character image is superposed on the feature image. By executing this for each character string, the respective character strings can be displayed at appropriate positions on the feature image.

When superposition of the feature image and the character image is completed, the navigation apparatus displays other characters (Step S28) and finishes the map display processing.

D. Output example, effect and variation:

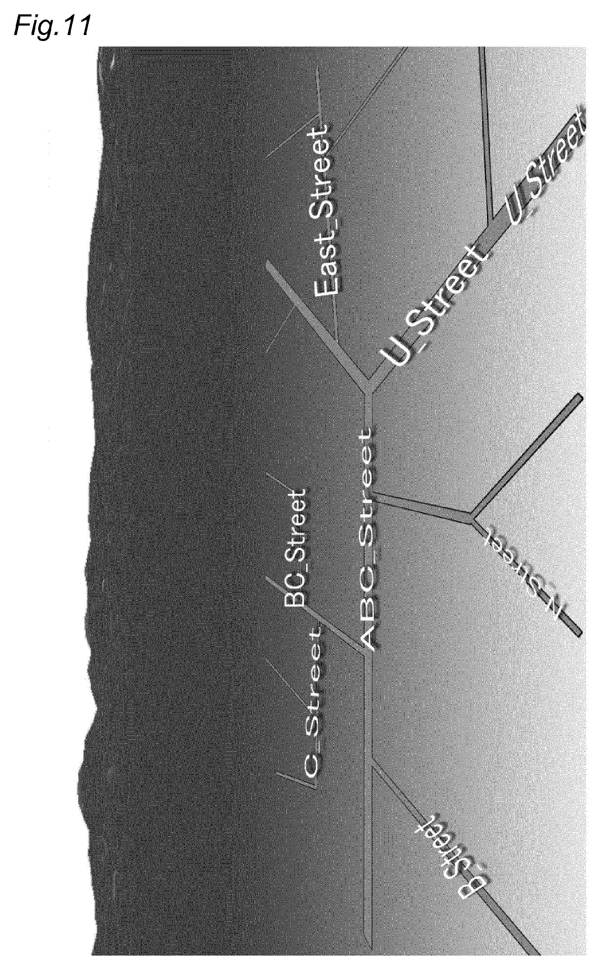

Fig. 11 is an explanatory view illustrating a display example of the 3D map. Here, a state in which only the character strings of the street names are displayed is exemplified. As illustrated, the road is drawn by the perspective projection by the position of the point of sight and the direction of the line of sight from up in the sky. The street names are displayed so as to follow the respective roads. As a result, the correspondence between the roads and the street names can be easily grasped visually. The street names are three-dimensionally displayed by various tilt angles. As a result, a three-dimensional feeling of the entire map is given, and the characters can be also represented three-dimensionally in diversified modes.

In this embodiment, the tilt angle of the street name can be set on the basis of the display direction and the display position of the road. Therefore, the user can intuitively feel the depth feeling of the character string by the tilt angle of the character and intuitively recognize the positions of the respective streets.

Moreover, in this embodiment, the tilt angle is set larger as it goes to the depth from the point of sight. In the perspective projection, the farther it goes from the point of sight, the smaller the road width becomes, and an interval between the roads also becomes smaller and thus, a region in which the character string of the road can be displayed also becomes narrower, but by making the tilt angle of the character string larger as above, the character string far from the point of sight can be represented in a mode according to the smallness of the region.

According to the 3D map display system of this embodiment described above, by generating the feature image and the character image separately and by applying the parallel projection to the character image, visibility of the characters can be ensured in a region far from the point of sight while the characters are displayed in diversified three-dimensional modes. Moreover, by setting the tilt angle when the character is displayed in accordance with the display direction of the road and the display position of the character string, a depth of the road can be represented by the display state of the characters and a map whose positional relation can be intuitively grasped easily can be provided.

The embodiment of the present invention has been described.

The 3D map display system of the present invention does not necessarily have to include all the functions of the aforementioned embodiment but only a part of them may be realized. Moreover, additional functions may be provided to the aforementioned contents.

It is needless to say that the present invention is not limited to the aforementioned embodiment and can employ various configurations within a range not departing from its gist. For example, a portion configured in a hardware manner in the embodiment can be also configured in a software manner and vice versa.

### [Industrial Applicability]

The present invention can be used for displaying a 3D map three-dimensionally representing not only the features but also the characters.

### [Reference Numerals]

- 10: 3D Map Display System
- 11: Command Input Unit
- 12: Route Search Unit
- 13: GPS
- 14: Main Control Unit
- 15: Display Control Unit
- 16: Feature Image Generating Unit
- 17: Character Image Generating Unit
- 18: Superposing Unit
- 20: Map Database
- 21: Network Data
- 22: Feature Data
- 23: Character Data

## Claims

1. A 3D map display system for displaying a 3D map including a feature and a character string, comprising:
a map database storing feature data representing a 3D shape of the feature and character data for displaying the character string;
a feature image generating unit for generating a feature image by perspective projection of the feature arranged in a virtual 3D space by using the feature data;
a character image generating unit for generating a character image by using the character data by arranging a polygon representing the character string in the virtual 3D space and applying parallel projection to the polygon; and
a superposing unit for superposing and displaying the character image on the feature image.

2. The 3D map display system according to claim 1, wherein
the character image generating unit performs parallel projection from the same direction as the direction of the line of sight in the perspective projection.

3. The 3D map display system according to claim 1 or 2, wherein
the character image generating unit generates a character plate polygon on which the character string is pasted;
arranges the character plate polygon in the virtual 3D space so that an angle between the character plate polygon and a ground surface is a predetermined value set on the basis of an arrangement direction and an arrangement position of the character in the projection image; and
performs the parallel projection.

4. The 3D map display system according to any one of claims 1 to 3, wherein
the character image generating unit generates the character image individually for each character string stored in the character data; and
the superposing unit sets arrangement of the character image in the projection image individually and performs the superposition.

5. The 3D map display system according to any one of claims 1 to 4, wherein
the feature includes a road, and the character string includes a name of the road; and
the character image generating unit generates the character image by arranging the character string representing the name of the road in a direction along the road.

6. A 3D map display method of displaying a 3D map including a feature and a character string by a computer, comprising steps, executed by the computer, of:
making an access to a map database storing feature data representing a 3D shape of the feature and character data for displaying the character string;
generating a feature image by perspective projection of the feature arranged in a virtual 3D space by using the feature data;
generating a character image by using the character data by arranging a polygon representing the character string in the virtual 3D space and applying parallel projection to the polygon; and
superposing and displaying the character image on the feature image.

7. A computer program for displaying a 3D map including a feature and a character string by a computer, for realizing functions of:
making an access to a map database storing feature data representing a 3D shape of the feature and character data for displaying the character string;
generating a feature image by performing perspective projection of the feature arranged in a virtual 3D space by using the feature data;
generating a character image by using the character data by arranging a polygon representing the character string in the virtual 3D space and performing parallel projection to the polygon; and
displaying the character image superposed on the feature image by the computer.
